# EUROPÄISCHE PATENTANMELDUNG

(11) **EP 2 324 720 A2**
(43) Veröffentlichungstag der Anmeldung: **25.05.2011**
(21) Anmeldenummer: 10189660.3
(22) Anmeldetag: 02.11.2010
(51) Int. Cl.: A23N 12/02, B65B 25/04, B65D 88/70, B65G 53/30, B65G 53/40

(54) **Verarbeitungsvorrichtung für Pflanzenteile und Füllvorrichtung für die Verarbeitungsvorrichtung**

(30) Priorität: 20.11.2009 DE 102009044611
(71) Anmelder: Kronen GmbH, 77694 Kehl-Goldscheuer (DE)
(72) Erfinder: Zillgith, Stephan, 77704, Oberkirch (DE); Hahn, Thomas, 77656, Offenburg (DE)
(74) Vertreter: Straube, Urs Norman

(57) **Zusammenfassung**

Die vorliegende Erfindung betrifft eine Verarbeitungsvorrichtung, insbesondere eine Reinigungsvorrichtung oder Desinfektionsvorrichtung für Pflanzenteile, und ein Füllvorrichtung, insbesondere für eine Verarbeitungsvorrichtung für Pflanzenteile. Damit die Füllvorrichtung mit einem sich nach unten verjüngenden Füllschacht (4), der eine Füllschachtwand, eine obere und eine untere Schachtöffnung aufweist, unter normalen Arbeitsbedingungen nicht verstopft, sind mehrere Einspritzdüsen (10) vorgesehen, die jeweils eingerichtet sind, einen Flüssigkeitsstrahl mit einer Geschwindigkeit zu erzeugen, die eine abwärts gerichtete Komponente und eine entlang der Füllschachtwand in jeweils dem gleichen Uhrzeigersinn gerichtete Komponente aufweist.

## Beschreibung

Die vorliegende Erfindung betrifft eine Verarbeitungsvorrichtung, insbesondere eine Reinigungsvorrichtung oder Desinfektionsvorrichtung für Pflanzenteile, gemäß dem Oberbegriff des Patentanspruchs 6 und eine Füllvorrichtung, insbesondere eine Füllvorrichtung für eine Verarbeitungsvorrichtung für Pflanzenteile, gemäß dem Oberbegriff des Patentanspruchs 1.

Eine derartige Verarbeitungsvorrichtung für Pflanzenteile, die aus der EP 1 938 693 bekannt ist, umfasst eine Fülleinheit und eine Verarbeitungseinheit, wobei die Verarbeitungseinheit mehrere Rohrabschnitte aufweist, die in Reihe über Verbindungsabschnitte verbunden sind. Die Rohrabschnitte sind gerade, senkrecht angeordnet und unlösbar über die Verbindungsabschnitte verbunden. Die Fülleinheit umfasst eine Füllvorrichtung mit einem sich nach unten verjüngenden Füllschacht, der eine Füllschachtwand, eine obere und eine untere Schachtöffnung aufweist. Der Füllschacht endet in einem Trichterabschnitt, in dem eine Flüssigkeit eingespritzt wird. Dieser Trichterabschnitt endet in einem Rohrabschnitt, in den ebenfalls die Flüssigkeit eingespritzt wird. Nach dem Venturiprinzip soll ein Unterdruck an der unteren Füllschachtöffnung erzeugt werden, und sollen die Pflanzenteile aus dem Füllschacht in die Verarbeitungseinheit mitgerissen werden. Die Pflanzenteile sind als Lebensmittel zum Verzehr bestimmt. Bei ihnen handelt es sich beispielsweise um Salatblätter. Die Flüssigkeit kann hauptsächlich aus erwärmtem Wasser bestehen, welches Enzyme, organische Säuren und/oder Chemikalien wie Ozon und Chlor enthält, um die Pflanzenteile mit den entsprechenden Stoffen anzureichern und/oder zu desinfizieren. Die notwendige Verweildauer der Pflanzenteile in der Verarbeitungseinheit lässt sich durch die Geschwindigkeit der Flüssigkeit in der Röhrenanordnung festlegen, wobei die Geschwindigkeit im Gleichgewichtszustand proportional zur Menge des eingespritzten Wasser ist, so dass die Verweildauer ebenfalls durch die Menge des eingespritzten Wassers festgelegt werden kann.

Ein Nachteil der Verarbeitungsvorrichtung besteht darin, dass sich in der Röhrenanordnung Verunreinigungen an Stellen festsetzen können, die nicht einsehbar und nicht zugänglich sind. Es ist daher weder möglich, die Sauberkeit der Röhrenanordnung zu prüfen, noch Verunreinigungen an bestimmten Stellen zu entfernen. Die Verunreinigungen können sich plötzlich lösen und die Verarbeitungseineinheit zusammen mit den Pflanzenteilen verlassen und dann als unerwünschter Bestandteil von Lebensmitteln zu Kunden gelangen.

Ein Nachteil der Füllvorrichtung besteht darin, dass diese insbesondere für Salatblätter leicht verstopfen kann. Zwischen den Salatblättern, die sich in dem Füllschacht ansammeln, können große Zwischenräume vorhanden sein, durch welche Luft hindurchgezogen werden kann, so dass sich an der unteren Schachtöffnung kein großer Unterdruck aufbauen kann, durch den die Salatblätter eingesaugt werden, und so dass die Salatblätter im Füllschacht verbleiben.

Der vorliegenden Erfindung liegt die Aufgabe zugrunde, eine Verarbeitungsvorrichtung für Pflanzenteile zu schaffen, die zur Reinigung leicht einsehbar und zugänglich ist, und eine Füllvorrichtung zu schaffen, die unter normalen Arbeitsbedingungen nicht verstopft.

Die der Erfindung zugrunde liegende Aufgabe wird durch eine Füllvorrichtung mit den Merkmalen des kennzeichnenden Teils des Patentanspruchs 1 und ein Verarbeitungsvorrichtung mit den Merkmalen des kennzeichnenden Teils des Patentanspruchs 6 gelöst.

Die vorliegende Erfindung betrifft eine Füllvorrichtung, insbesondere für eine Verarbeitungsvorrichtung für Pflanzenteile, wobei mehrere Einspritzdüsen vorgesehen sind, die jeweils eingerichtet sind, einen Flüssigkeitsstrahl mit einer Geschwindigkeit zu erzeugen, die eine abwärts gerichtete Komponente und eine entlang der Füllschachtwand in jeweils dem gleichen Uhrzeigersinn gerichtete Komponente aufweist. Das eingespritzte Wasser bildet dann einen zur unteren Schachtöffnung gerichteten Strudel, wobei das um die Füllschachtwand strömende Wasser dafür sorgt, dass die Pflanzenteile, insbesondere Salatblätter, sich im Füllschacht ständig bewegen und schließlich von dem Strudel in die untere Füllschachtöffnung eingezogen werden.

In einer bevorzugten Ausführungsform münden die Einspritzdüsen in Einspritzöffnungen, die in der Füllschachtwand ausgebildet sind. Die Einspritzdüsen bilden somit keine Unebenheiten, an denen die Pflanzenteile hängen bleiben bzw. beschädigt werden können.

In einer Weiderbildung der bevorzugten Ausführungsform sind in einem oberen Bereich des Füllschachts mehr Einspritzöffnungen als in einem unteren Bereich vorgesehen. Dadurch wird sichergestellt, dass die Füllschachtwand sowohl in dem oberen Bereich als auch in dem unteren Bereich, wo der Umfang geringer als in dem oberen Bereich ist, vollständig umspült wird. Wenn die Schachtwand in dem oberen Bereich flacher ansteigt als in dem unteren Bereich, können die Düsen bei der Schachtwand im unteren Bereich zudem mit einem kleineren Winkel gegenüber einer Horizontalen ausgerichtet sein als in dem oberen Bereich, um den Effekt der stärkeren Wirkung der Schwerkraft im unteren Bereich zu kompensieren. Die abwärts gerichtete Komponente der Geschwindigkeit ist für die Düsen im unteren Bereich dann etwas kleiner als für die Düsen im oberen Bereich, während die entlang der Schachtwand gerichtete Komponente für die Düsen im unteren Bereich etwas größer als für die Düsen im oberen Bereich ist.

In noch einer bevorzugten Ausführungsform weist der Füllschacht einen kreisförmigen, sich nach unten verjüngenden Querschnitt auf. Ein Füllschacht mit kreisförmigem Querschnitt kann besonders gut von dem eingespritzten Wasser umspült werden. Der Querschnitt kann auch die Form eines Vielecks aufweisen, wobei die einzelnen Ecken einen Winkel einschließen, der deutlich größer als 90° ist.

In noch einer bevorzugten Ausführungsform ist eine obere Düse oberhalb des Füllschachts angeordnet. Die obere Düse sorgt dafür, dass die Pflanzenteile vollständig benetzt werden, und für eine senkrecht nach unten auf die Pflanzenteile wirkende Kraft. Die Einspritzmenge, welche durch die obere Pumpe eingespritzt wird, ist variabel, so dass die Fließgeschwindigkeit der Flüssigkeit in der Verarbeitungsvorrichtung veränderlich ist.

Die vorliegende Erfindung betrifft ferner eine Verarbeitungsvorrichtung für Pflanzenteile, wobei die Längsausrichtungen der Rohrabschnitte um weniger als 45°, vorzugsweise weniger als 10° oder 5°, von einer Horizontalen abweichen, d.h. die Rohrabschnitte sind um weniger als 45°, vorzugsweise weniger als 10° oder 5° geneigt, und wobei Verbindungsabschnitte an den Rohrabschnitten lösbar befestigt sind. Für den Fall, dass die Rohrabschnitte gebogen sind, wird die Abweichung anhand von Geraden bestimmt, die jeweils zwischen entsprechenden Punkten der beiden gegenüberliegenden Enden der Rohrabschnitte (zum Beispiel Mittelpunkten) verlaufen. Die Enden der Rohrabschnitte, die üblicherweise eine Länge von mehr als einem halben Meter und zwischen einem halben Meter und 20 Meter haben, sind leicht erreichbar, so dass die Verbindungsabschnitte vom Boden aus gelöst werden können. Nach dem Lösen und Entfernen der Verbindungsabschnitte sind die Rohrabschnitte einsehbar und leicht zugänglich, so dass festgesetzte Verunreinigungen erkannt und mechanisch entfernt werden können.

In einer bevorzugten Ausführungsform sind die Rohrabschnitte gerade und weichen in Längsrichtung von der Horizontalen vorzugsweise um einen Winkel zwischen 1° und 3° ab. Dadurch wird sichergestellt, dass die Neigung ausreichend groß ist, so dass Luftblasen entlang der Rohrabschnitte weiterwandern, wobei die gegenüberliegenden Enden der Rohrabschnitte gleichzeitig besonders leicht erreichbar sind.

In einer Weiderbildung der bevorzugten Ausführungsform verbindet einer von zwei aufeinanderfolgenden Verbindungsschnitten jeweils ein oberes Ende eines der Rohrabschnitte, welcher unten angeordnet ist, mit einem unteren Ende eines der Rohrabschnitte, welcher oben angeordnet ist, und verbindet der andere von zwei aufeinanderfolgenden Verbindungsschnitten jeweils ein unteres Ende eines der Rohrabschnitte, welcher unten angeordnet ist, mit einem oberen Ende eines der Rohrabschnitte, welcher oben angeordnet ist. Die Luftblasen können dann von einem unteren Rohr jeweils zu einem oberen Rohr weiter wandern. Die Rohrabschnitte können platzsparend in zwei Ebenen angeordnet werden.

In noch einer Weiderbildung der bevorzugten Ausführungsform ist an jedem der oberen Rohrabschnitte eine Entlüftungsöffnung vorgesehen. Die Luft kann dann aus den oberen Rohrabschnitten entweichen, so dass die Funktionsfähigkeit der Verarbeitungseinheit nicht durch angesammelte Luft beeinträchtigt wird.

In noch einer bevorzugten Ausführungsform sind an Enden der der Verbindungsabschnitte ringförmige Flansche ausgebildet. Die Flansche dienen dazu, jeweils einen Gewindering mit Innengewinde zurückzuhalten. An zugehörigen Enden der Rohrabschnitte sind Außengewinde vorgesehen, auf welche die Gewinderinge aufschraubbar sind. Alternativ können an Enden der Rohrabschnitte ringförmige Flansche ausgebildet sein, die jeweils dazu dienen, einen Gewindering mit Innengewinde zurückzuhalten, und können an zugehörigen Enden der Verbindungsabschnitte Außengewinde vorgesehen sein, auf welche die Gewinderinge aufschraubbar sind. "Zugehöriges Ende" bedeutet in diesem Zusammenhang das Ende des Verbindungsabschnitts, das mit einem bestimmten Rohrabschnitt verbunden ist oder sein soll, bzw. das Ende des Rohrabschnitts, das mit einem bestimmten Verbindungsabschnitt verbunden ist oder sein soll. An dem Gewindering, dem Ende des Rohrabschnitts und dem Ende des Verbindungsabschnitts können weitere Dichtungen vorgesehen sein. Die gegenüberliegenden Enden des Rohrabschnitts und des Verbindungsabschnitts können genauso ausgebildet sein. Die Verbindungsabschnitte werden mit Hilfe eines Hakenschlüssels von den Rohrabschnitten gelöst und mit diesen verbunden. Die Verbindungen der Rohrabschnitte und Verbindungsabschnitte sind zudem abdichtend.

In noch einer bevorzugten Ausführungsform weist die Fülleinheit eine erfindungsgemäße Füllvorrichtung auf. Durch die Füllvorrichtung kann erreicht werden, dass die Verarbeitungsvorrichtung ohne Verstopfung kontinuierlich arbeitet.

Im Folgenden wird die Erfindung mit Bezugnahme auf die Zeichnungen näher beschrieben. Es zeigen:
FIG. 1 eine perspektivische Ansicht einer Desinfektionsvorrichtung für Salatblätter;
FIG. 2 eine Draufsicht der Desinfektionsvorrichtung aus FIG. 1;
FIG. 3 eine Vorderansicht der Desinfektionsvorrichtung aus FIG. 1;
FIG. 4 eine Rückansicht einer Fülleinheit und einer Abtransporteinheit der Desinfektionsvorrichtung aus FIG. 1;
FIG. 5 eine Seitenansicht der Desinfektionsvorrichtung aus FIG. 1;
FIG. 6 eine perspektivische Ansicht einer Füllvorrichtung;
FIG. 7 eine Draufsicht der Füllvorrichtung aus FIG. 6; und
FIG. 8 eine Seitenansicht der Füllvorrichtung aus FIG. 6.

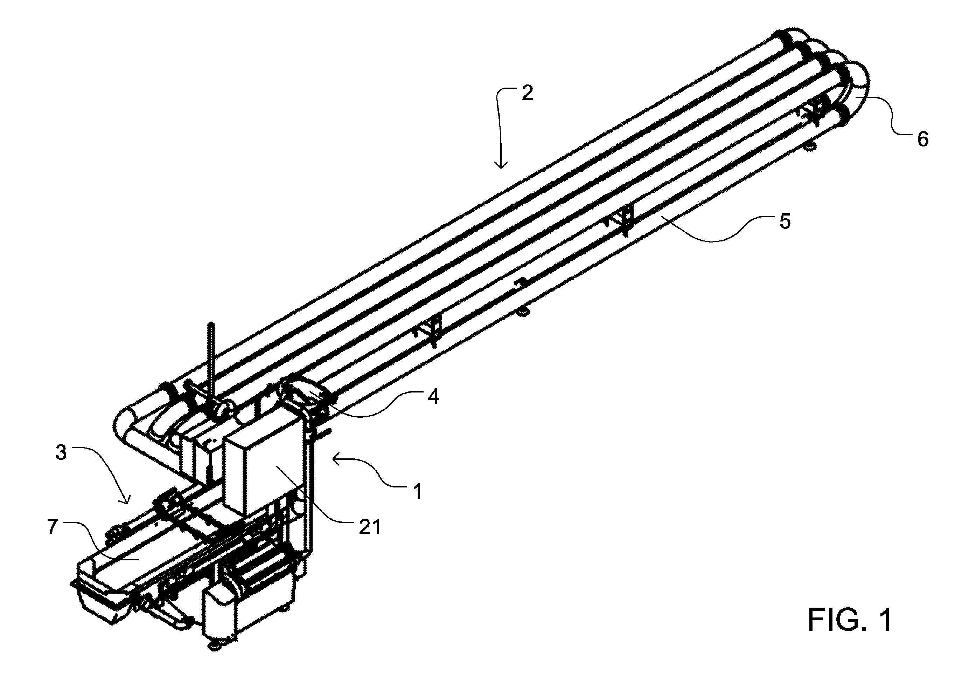

FIG. 1 zeigt eine perspektivische Ansicht einer Desinfektionsvorrichtung für Salatblätter. Die Desinfektionsvorrichtung umfasst eine Fülleinheit 1, eine Verarbeitungseinheit 2 und eine Abtransporteinheit 3. Die Salatblätter werden in einen Füllschacht 4 der Fülleinheit 1 eingefüllt. In den Füllschacht 4 wird gleichzeitig Wasser eingespritzt, welches Chemikalien wie Ozon oder Chlor zur Desinfektion und Haltbarmachung der Salatblätter aufweist. Das Wasser läuft durch den Füllschacht 4 in eine Rohrleitung ab, die mit der Verarbeitungseinheit 2 verbunden ist und führt dabei die Salatblätter mit. Die Verarbeitungseinheit 2 setzt sich aus mehreren geraden Rohrabschnitten 5 zusammen, die durch röhrenförmige, gebogene Verbindungsabschnitte 6 in Reihe miteinander verbunden sind und ein Rohr mit einer bestimmten Gesamtlänge bilden. Die Gesamtlänge des Rohrs und die Menge des eingespritzten Wasser bestimmen die Durchlaufzeit der Salatblätter durch die Verarbeitungseinheit 2 und somit die Verweildauer der Salatblätter in dem mit Chemikalien versetzten Wasser. Die Salatblätter verlassen schließlich die Verarbeitungseinheit 2 und werden auf ein weitmaschiges Förderband 7 der Abtransporteinheit 3 geschwemmt, durch welches das Wasser hindurchsickert, und welches die Salatblätter abtransportiert. Statt des Förderbands 7 kann auch ein Vibrationstisch mit einer gelochten Tischoberfläche verwendet werden. Eine zentrale Steuerung 21 steuert die Einrichtungen der Desinfektionsvorrichtung wie Pumpen, einen Lüfter und eine Wasserzufuhr, die im Folgenden noch beschrieben werden.

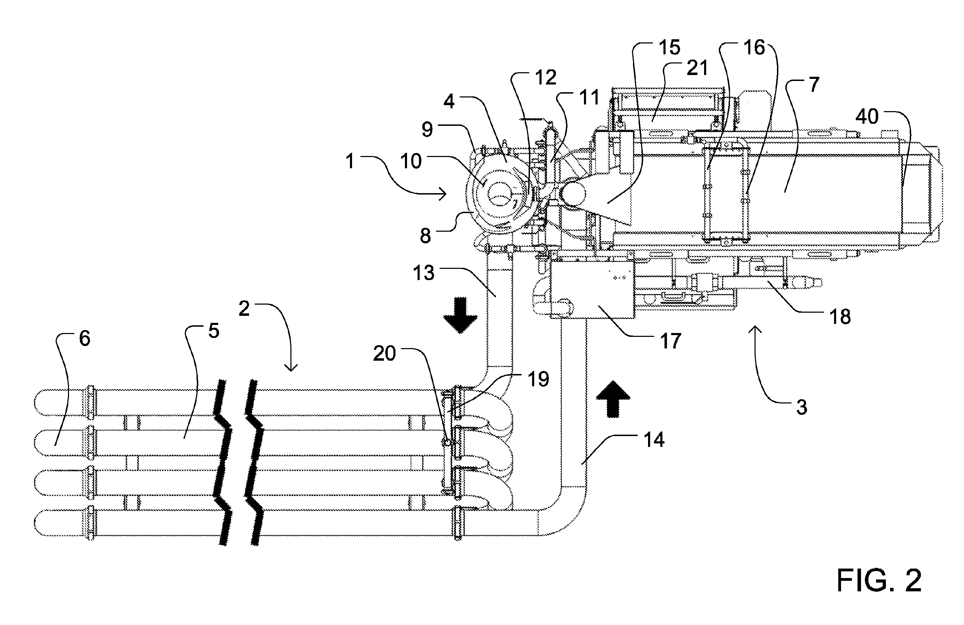

FIG. 2 zeigt eine Draufsicht der Desinfektionsvorrichtung aus FIG. 1. Die Salatblätter werden mit einem Förderband (nicht gezeigt), welches über einen abgesenkten Randbereich 8 des trichterförmigen Füllschachts 4 verläuft, durch eine obere Füllschachtöffnung in den Füllschacht 4 der Fülleinheit 1 eingefüllt. Gleichzeitig wird 0,25 m³/min Wasser, das mit Chemikalien versetzt ist, über Zuleitungen 9 zu den Einspritzöffnungen 10 zugeführt und dort in den Füllschacht 4 der Fülleinheit 1 eingespritzt. Oberhalb des Füllschachts 4 gegenüber dem abgesenkten Randbereich 8 ist eine obere kreisbogenförmige Einspritzdüse 12 vorgesehen, über die ungefähr 0,25 m³/min Wasser in den Füllschacht 4 eingespritzt wird, welches über eine Zuleitung 11 zu der Einspritzdüse zugeführt wird. Zur Versorgung der oberen Einspritzdüse 12 ist eine andere Pumpe vorgesehen als zur Versorgung der Einspritzöffnungen 10. Dies ermöglicht es, die zu der oberen Einspritzdüse 12 zugeführte Wassermenge zu variieren und dadurch dessen Fließgeschwindigkeit zu verändern. Durch eine untere Füllschachtöffnung des Füllschachts 4 gelangt das Wasser mit den Salatblättern in die Rohrleitung 13 und fließt weiter in Pfeilrichtung zu der Verarbeitungseinheit 2 und dann durch deren in Reihe angeordneten geraden Rohrabschnitte 5, die eine Länge von mehreren Metern haben, und die gebogenen röhrenförmigen Verbindungsabschnitte 6. Die Rohrabschnitte 5 sind in zwei Ebenen angeordnet. Die oberen Rohrabschnitte 5 der oberen Ebene liegen über den unteren Rohrabschnitten 5 der unteren Ebene. In den oberen Rohrabschnitten 5 sind Entlüftungsöffnungen ausgebildet, die in einer Rohrverzweigung 19 enden, auf der ein Steigrohr 20 sitzt. Das Rohr, welches sich aus den Rohrabschnitten 5 und den Verbindungsabschnitten zusammensetzt, hat eine Gesamtlänge von etwa 90 m. Der Rohrdurchmesser beträgt ca. 15 cm. Für die angegebene Menge des eingespritzten Wassers lässt sich eine Verweildauer von etwas über 2 min. in der Verarbeitungseinheit sicherstellen. Von der Verarbeitungseinheit 2 gelangt das Wasser in Pfeilrichtung schließlich über eine weitere Rohrleitung 14 zu einer sich fächerförmig aufweitenden Auslasseinrichtung 15 der Abtransporteinheit 3. Die Salatblätter fallen von der Auslasseinrichtung 15 auf das weitmaschige Förderband 7 und werden von dem Förderband 7 abtransportiert, während das Wasser durch die Maschen des Förderbands 7 fließt. Unter dem Förderband 7 ist eine Auffangwanne vorgesehen, von welcher das Wasser zu einem Filterbecken mit schrägem Boden fließt, durch einen Trommelfilter strömt und schließlich in einen Pumpentank gelangt. Von Pumpen wird das Wasser durch die Zuleitungen 9, 11 wieder in den Füllschacht 4 gepumpt. Von einer Berieselungseinrichtung 16 wird Wasser, welches mit Hilfe einer Pumpe aus dem Pumpentank 25 zugeführt wird, auf die Salatblätter auf dem Förderband 7 zur weiteren Desinfektion gesprüht. Ein Gebläse 17 erzeugt einen Luftstrom, der über Lüfterrohre 18 und Schläuche unter ein vorderes Ende 17 des Förderbands 7 gelenkt wird, um die Salatblätter von dem Förderband 7 zu lösen. Die Luft wird am vorderen Ende 17 zusätzlich so zwischen die gegenüberliegenden Seiten des Förderbands 7 gelenkt, dass die Luft unten durch die Maschen des Förderbands 7 austritt und die Salatblätter besonders wirkungsvoll ablöst. In dem Pumpentank ist eine Füllstandsmesseinrichtung vorgesehen. Eine zentrale Steuerung 21 steuert eine Wasserzufuhr in Abhängigkeit von dem Füllstand in dem Pumpentank, um eine Wassermenge zu ersetzen, die während der Verarbeitung kontinuierlich verloren geht.

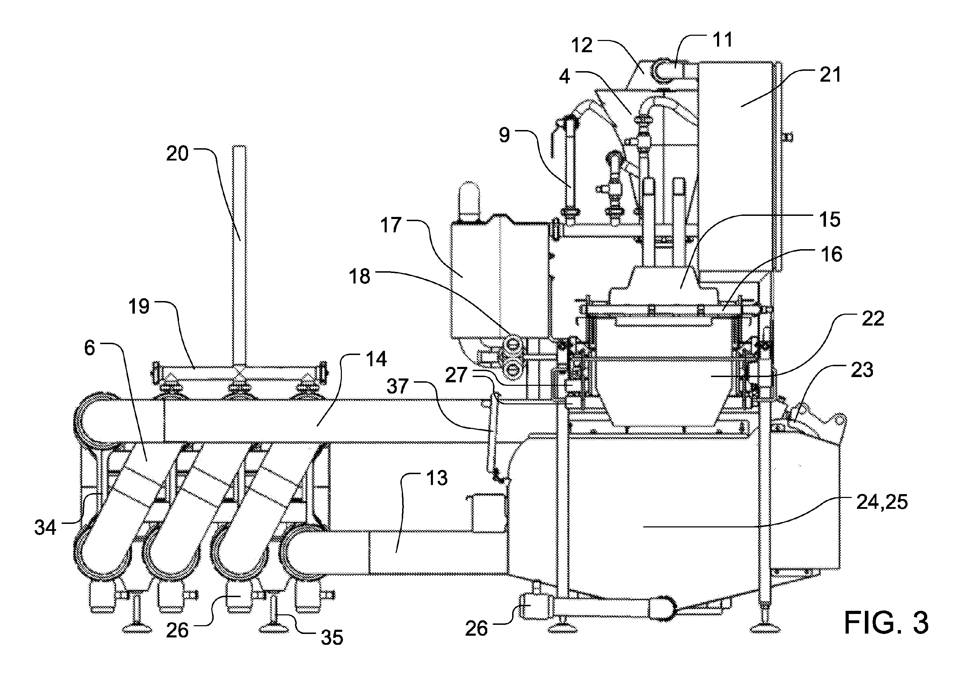

FIG. 3 zeigt eine Vorderansicht der Desinfektionsvorrichtung aus FIG. 1. Am Ende des Förderbands ist ein Ausgangsschacht 22 angeordnet. Das Filterbecken 24, in welches das Wasser von dem Förderband läuft, ist über einem Pumpentank 25 zusammen mit diesem in einem Gehäuse angeordnet. Seitlich von dem Filterbecken 24 ist ein Trommelfilter 23 angeordnet. Das Bezugszeichen 27 bezeichnet eins von zwei weiteren parallelen Lüfterrohren des Lüfters 17, auf welches ein Schlauch gesteckt wird, um die Luft unter das vorderen Ende 40 des Förderbands und zwischen die gegenüberliegenden Seiten des Förderbands zu lenken. Eine seitliche Reinigungsklappe 37 des Pumpentanks 25 ist aufgeklappt. Die Rohrabschnitte 5 werden durch eine Rohrhalterung 34 mit Stützfüßen 35 gehaltert. An den unteren Rohrabschnitten und dem Pumpentank 25 sind Ventile 26 vorgesehen, die als Absperrhähne ausgebildet sein können und es ermöglichen, das Wasser aus der Verarbeitungseinheit 2 und dem Pumpentank 25 vollständig zu entleeren. Der Pumpentank 25 hat einen Boden, der zu dem Ventil 26 hin schräg abfällt. Die Ventile 26 sind also bei dem tiefsten Punkt der unteren Rohrabschnitte 5 und bei tiefsten Punkt des Pumpentanks 25 angeordnet.

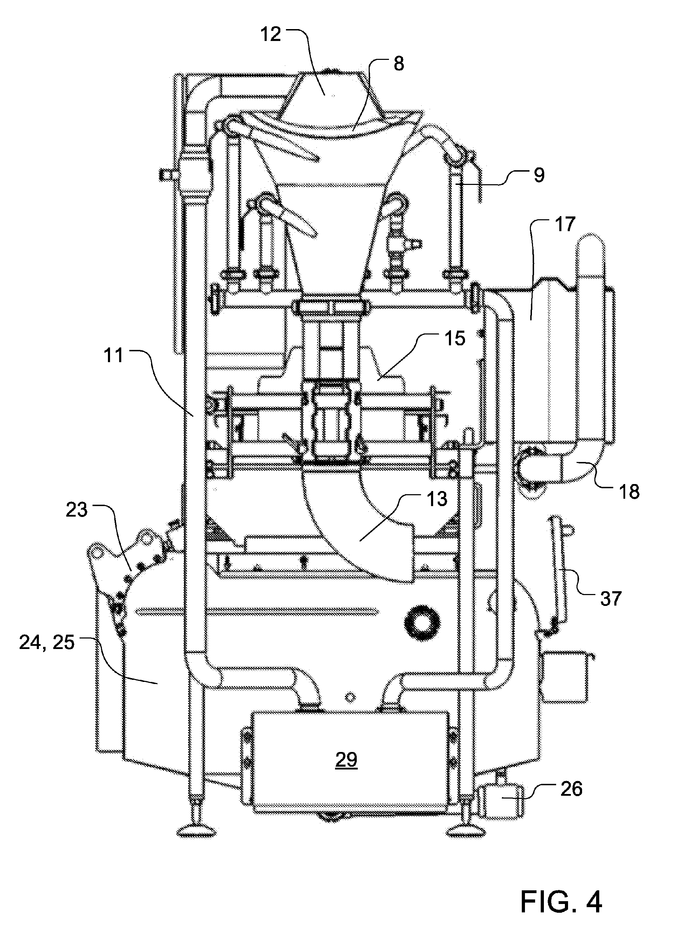

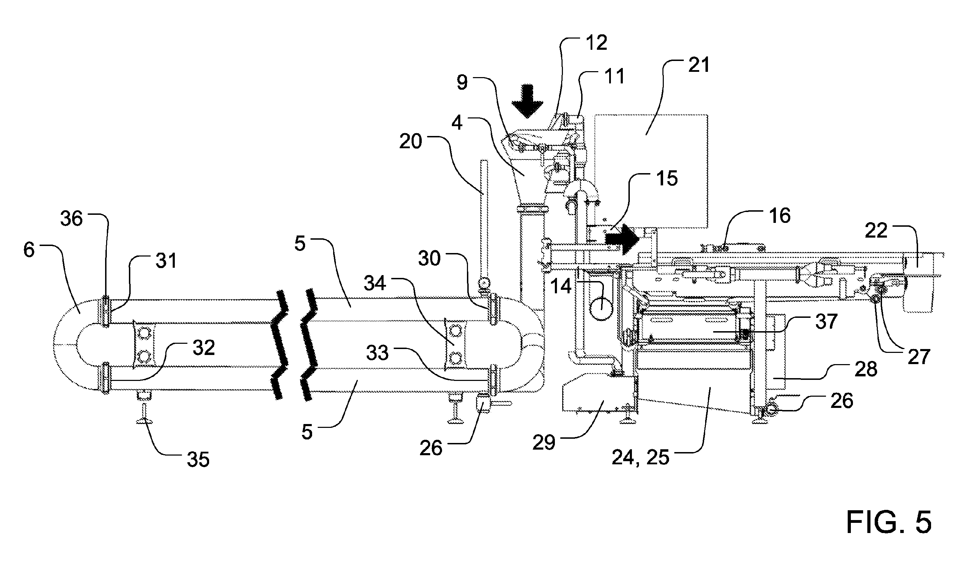

FIG. 4 und FIG. 5 zeigen eine Rückansicht einer Fülleinheit und einer Abtransporteinheit bzw. eine Seitenansicht der Desinfektionsvorrichtung aus FIG. 1. Der Lüfter 17, die Rohrabschnitte 5, Verbindungsabschnitte 6 und das Rohr 14 sind in FIG. 5 nicht oder unvollständig dargestellt. Die Pumpen 29, die in dem gleichen Gehäuse untergebracht sind, pumpen das Wasser aus dem Pumpentank 25 zu dem Füllschacht 4 und zu der Berieselungseinrichtung 16. Die Rohrabschnitte 5 sind entlang ihrer Länge um 1 bis 3 Grad gegenüber der Horizontalen geneigt. Die oberen Rohrabschnitte 5 liegen parallel auf derselben Höhe und haben das obere Ende 30 und das untere Ende 31. Entlüftungsöffnungen sind bei deren oberen Enden vorgesehen, wo das Steigrohr 20 angebracht ist. Die unteren Rohrabschnitte 5 liegen parallel auf derselben Höhe und haben das untere Ende 33 und das obere Ende 32. Die unteren Rohrabschnitte 5 sind also umgekehrt ausgerichtet wie die oberen Rohrabschnitte 5. Jeder Verbindungsabschnitt 6 verbindet entweder ein oberes Ende 30 eines oberen Rohrabschnitts 5 mit einem unteren Ende 33 eines unteren Rohrabschnitts oder ein unteres Ende 31 eines oberen Rohrabschnitts 5 mit einem oberen Ende 32 eines unteren Rohrabschnitts, so dass Luft von einem der unteren Rohrabschnitten 5 über einen der oberen Rohrabschnitte 5 durch die Entlüftungsöffnung des jeweiligen oberen Rohrabschnitts 5 in das Steigrohr 20 entweichen kann. Der Füllschacht 4 liegt höher als die Auslasseinrichtung 15, so dass das Wasser aufgrund des Wasserdrucks von dem Füllschacht 4 durch die Rohrabschnitte 5 und Verbindungsabschnitte 6 zu der Abtransporteinheit 3 strömt. Das Steigrohr 20 ist oben offen und verhindert, dass das Wasser aus den Entlüftungsöffnungen 20 der oberen Rohrabschnitte 5 strömt. An den beiden Enden der Verbindungsabschnitte 6 ist jeweils ein Flansch ausgebildet, der einen Gewindering 36 mit einem Innengewinde zurückhält. Der Gewindering 36 ist jeweils auf ein Außengewinde geschraubt, das an einem der Enden der Verbindungsabschnitte 5 ausgebildet ist. Alternativ können Gewinderinge 36 auch auf Flanschen sitzen, die an beiden Enden des Rohrabschnitts 6 vorgesehen sind, und können an den beiden Enden der Verbindungsabschnitte Außengewinde vorgesehen sein. Dichtungsringe werden zur Abdichtung der Verbindungen zwischen den Rohrabschnitten 5 und den Verbindungsabschnitten 6 verwendet.

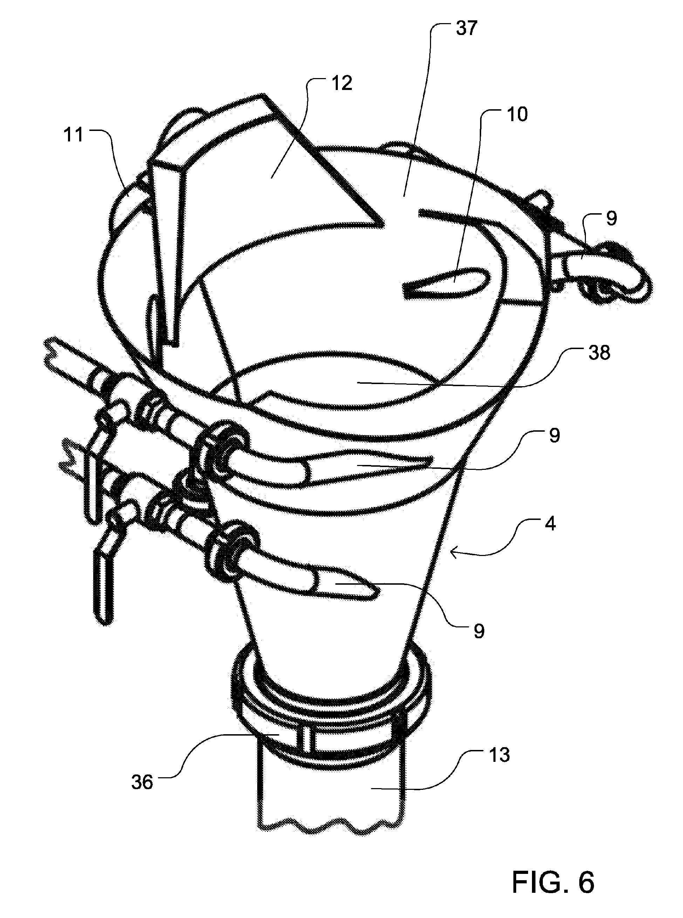

FIG. 6 zeigt eine perspektivische Ansicht einer Füllvorrichtung. Die obere Düse 12 ist gegenüber dem abgesenkten Randbereich 8 des Füllschachts 4 vorgesehen. Das Wasser wird von der kreisbogenförmigen Unterseite der oberen Düse 12, die in den Füllschacht 4 hineinragt, und von den Einspritzöffnungen 10, die in der Seitenwand des Füllschachts 4 ausgebildet sind, eingespritzt. Der Füllschacht 4 umfasst einen oberen Bereich 37, in dem dessen Seitenwand relativ flach abfällt, und einen unteren Bereich 38, in dem dessen Seitenwand relativ steil abfällt. Der Füllschacht 4 ist mittels eines Gewinderings 36 auf gleiche Weise wie die Rohrabschnitte 5 mit den Verbindungsabschnitten 6 lösbar mit dem Rohr 13 verbunden.

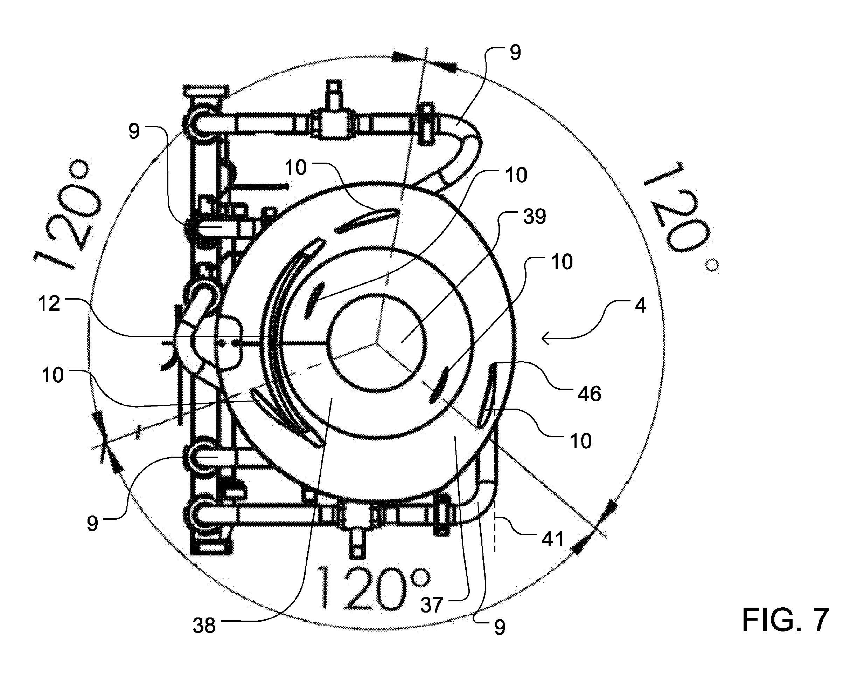

FIG. 7 zeigt eine Draufsicht der Füllvorrichtung aus FIG. 5. Im oberen flach abfallenden Bereich 37 sind drei Einspritzöffnungen 10 ausgebildet, die auf der gleichen Höhe gleichmäßig um 120° versetzt angeordnet sind. Im unteren steil abfallenden Bereich 38 sind zwei Einspritzöffnungen 10 ausgebildet, die auf gleicher Höhe gegenüberliegend um 180° versetzt angeordnet sind. Die Einspritzöffnungen 10 weisen jeweils einen äußeren Randpunkt 46 auf, der in einer horizontalen Projektion mit einer Seite des Zuleitung 9 auf einer Linie 41 liegt. In dieser Projektion liegt die Linie 41 in diesem äußeren Randpunkt 46 außerdem tangential an der Seitenwand des Füllschachts an. Allgemein soll, die Linie 41 nicht mehr als 45°, vorzugsweise 10° von einer Tangente in den äußeren Randpunkt 46 abweichen. Die Einspritzöffnungen 10 in dem unteren Bereich 38 sind etwas kleiner als die Einspritzöffnungen 10 in dem oberen Bereich 37, da sie sich als Schnittfläche der Seitenwand des Füllschachts 4 mit den Rohren 9 ergeben und die Füllschachtwand im unteren Bereich 38 stärker gekrümmt ist.

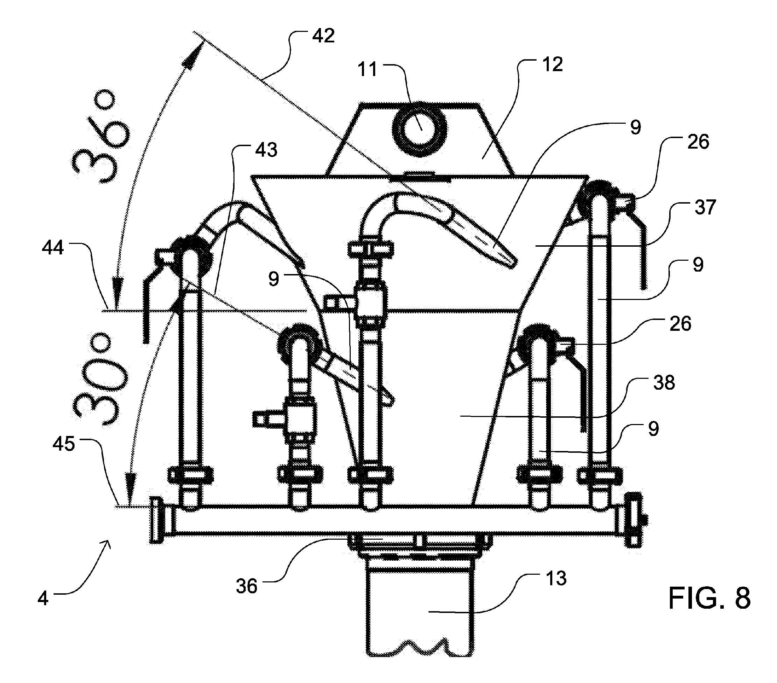

FIG. 8 zeigt eine Seitenansicht der Füllvorrichtung aus FIG. 5. Eine Tangente 43 an jedes der Rohre 9 schließt im unteren Bereich 38 einen Winkel von 45° mit einer Horizontalen 45 und somit einen kleineren Winkel ein als eine Tangente 42 an jedes Rohr 9 im oberen Bereich, welches einen Winkel von 36° mit einer Horizontalen 44 einschließt. Das Rohr 9 steigt im oberen Bereich 37 bei dem Füllschacht 4 also stärker an als das Rohr 9 im unteren Bereich bei dem Füllschacht 4. Durch den geringeren Anstieg im unteren Bereich 38 wird sichergestellt, dass die Schachtwand im unteren Bereich 38 vollständig von dem Wasser aus den Einspritzöffnungen im unteren Bereich 38 umspült wird, wo die Schwerkraft aufgrund der steil abfallenden Schachtwand des Füllschachts 4 eine größere Wirkung hat.

## Patentansprüche

1. Füllvorrichtung, insbesondere für eine Verarbeitungsvorrichtung für Pflanzenteile, mit einem sich nach unten verjüngenden Füllschacht (4), der eine Füllschachtwand, eine obere und eine untere Schachtöffnung aufweist, **dadurch gekennzeichnet, dass** mehrere Einspritzdüsen (10) vorgesehen sind, die jeweils eingerichtet sind, einen Flüssigkeitsstrahl mit einer Geschwindigkeit zu erzeugen, die eine abwärts gerichtete Komponente und eine entlang der Füllschachtwand in jeweils dem gleichen Uhrzeigersinn gerichtete Komponente aufweist.

2. Füllvorrichtung nach Anspruch 1, **dadurch gekennzeichnet, dass** die Einspritzdüsen in Einspritzöffnungen (10) münden, die in der Füllschachtwand ausgebildet sind.

3. Füllvorrichtung nach Anspruch 2, **dadurch gekennzeichnet, dass** in einem oberen Bereich des Füllschachts (4) mehr Einspritzöffnungen als in einem unteren Bereich vorgesehen sind.

4. Füllvorrichtung nach einem der vorhergehenden Ansprüche, **dadurch gekennzeichnet, dass** der Füllschacht (4) einen kreisförmigen, sich nach unten verjüngenden Querschnitt aufweist.

5. Füllvorrichtung nach einem der vorhergehenden Ansprüche, **dadurch gekennzeichnet, dass** eine obere Düse (12) oberhalb des Füllschachts angeordnet ist.

6. Verarbeitungsvorrichtung, insbesondere eine Reinigungsvorrichtung oder Desinfektionsvorrichtung für Pflanzenteile, mit einer Fülleinheit (1) und einer Verarbeitungseinheit (2), wobei die Verarbeitungseinheit (2) mehrere Rohrabschnitte (5) aufweist, die in Reihe über Verbindungsabschnitte (6) verbunden sind, **dadurch gekennzeichnet, dass** die Längsausrichtungen der Rohrabschnitte (5) um weniger als 45°, vorzugsweise weniger als 10° oder 5°, von einer Horizontalen abweichen, und dass die Verbindungsabschnitte (6) an den Rohrabschnitten (5) lösbar befestigt sind.

7. Verarbeitungsvorrichtung nach Anspruch 6, **dadurch gekennzeichnet, dass** die Rohrabschnitte (5) gerade sind und in Längsrichtung von der Horizontalen vorzugsweise um einen Winkel zwischen 1° und 3° abweichen.

8. Verarbeitungsvorrichtung nach Anspruch 6 oder Anspruch 7, **dadurch gekennzeichnet, dass** einer von zwei aufeinanderfolgenden Verbindungsschnitten (6) jeweils ein oberes Ende (32) eines der Rohrabschnitte (5), welcher unten angeordnet ist, mit einem unteren Ende (31) eines der Rohrabschnitte (5), welcher oben angeordnet ist, verbindet, und dass der andere von zwei aufeinanderfolgenden Verbindungsschnitten (6) jeweils ein unteres Ende (33) eines der Rohrabschnitte (5), welcher unten angeordnet ist, mit einem oberen Ende (30) eines der Rohrabschnitte (5), welcher oben angeordnet ist, verbindet.

9. Verarbeitungsvorrichtung nach Anspruch 8, **dadurch gekennzeichnet, dass** an jedem der oberen Rohrabschnitte (5) eine Entlüftungsöffnung vorgesehen ist.

10. Verarbeitungsvorrichtung nach einem der Ansprüche 6 bis 9, dass an Enden der Rohrabschnitte (5) oder der Verbindungsabschnitte (6) Flansche ausgebildet sind, dass an den Enden Gewinderinge (36) mit Innengewinde vorgesehen sind, die von den Flanschen zurückgehalten werden, und dass an zugehörigen Enden der Verbindungsabschnitte (6) oder Rohrabschnitte (5) Außengewinde vorgesehen sind, auf welche die Gewinderinge (36) aufschraubbar sind.

11. Verarbeitungsvorrichtung nach einem der Ansprüche 6 bis 10, dass die Fülleinheit (1) eine Füllvorrichtung gemäß einem der Ansprüche 1 bis 5 aufweist.
